# EUROPÄISCHE PATENTANMELDUNG

(11) **EP 1 953 507 A1**
(43) Veröffentlichungstag der Anmeldung: **06.08.2008**
(21) Anmeldenummer: 07120749.2
(22) Anmeldetag: 15.11.2007
(51) Int. Cl.: G01F 23/26

(54) **Pulverniveau-Sensoreinheit für Sprühbeschichtungspulver**

(30) Priorität: 02.02.2007 DE 102007005348
(71) Anmelder: ITW Gema GmbH, 9015 St. Gallen (CH)
(72) Erfinder: Mauchle, Felix, 9030 Abtwil (CH); Steinemann, Mark, 8354 Hofstetten (CH)
(74) Vertreter: Meissner, Bolte & Partner

(57) **Zusammenfassung**

Pulverniveau-Sensoreinheit. Sie enthält mindestens einen Sensor (102), über dessen Sensordetektionsfläche (108) sich eine Druckluftkammer (106) erstreckt. Die Druckluftkammer (106) ist auf ihrer der Sensordetektionsfläche (108) gegenüberliegenden Seite durch eine luftdurchlässige poröse Frontwand (110) begrenzt. Die Frontwand (110) ist derart ausgebildet, dass sie für Druckluft, jedoch nicht für Sprühbeschichtungspulver durchlässig ist.

## Beschreibung

Die Erfindung betrifft eine Pulverniveau-Sensoreinheit für Sprühbeschichtungspulver in einem Pulverbehältnis.

Das Pulverbehältnis kann ein formstabiler Behälter oder ein Sack sein.

Bei der Detektierung von Pulverniveau besteht die Gefahr, dass das Sprühbeschichtungspulver an der Detektionsseite der Sensoreinheit haftet und dadurch Detektionsfehler entstehen.

Durch die Erfindung soll die Aufgabe gelöste werden, Detektionsfehler der genannten Art zu vermeiden.

Diese Aufgabe wird gemäß der Erfindung durch die Merkmale von Anspruch 1 gelöst.

Demgemäß betrifft die Erfindung eine Pulverniveau-Sensoreinheit für Sprühbeschichtungspulver in einem Pulverbehältnis, enthaltend mindestens einen Sensor zur Detektion des Pulverniveaus in dem Pulverbehältnis, dadurch gekennzeichnet, dass eine Druckluftkammer vorgesehen ist, welche hinten durch eine, die Detektionsseite des Sensors bildende, in Detektionsrichtung zeigende Sensordetektionsfläche und vorne durch eine poröse Frontwand begrenzt ist, welcher der Sensordetektionsfläche mit Abstand gegenüberliegend angeordnet ist; und dass ein Druckluftkanal vorgesehen ist, welche die Druckluftkammer mit einem externen Druckluftanschluss verbindet, wobei die poröse Frontwand durch die Poren hindurch nur für Druckluft, jedoch nicht für Sprühbeschichtungspulver durchlässig ist und wobei die Frontwand derart ausgebildet ist, dass der Sensor durch die Frontwand hindurch Sprühbeschichtungspulver detektieren und in Abhängigkeit vom Detektionsergebnis ein Sensorsignal erzeugen kann.

Weitere Merkmale der Erfindung sind in den Unteransprüchen enthalten.

Die Erfindungen wird im Folgenden Bezug auf die beiliegenden Zeichnungen anhand von bevorzugten Ausführungsformen als Beispiele beschrieben. In den Zeichnungen zeigen
- Fig. 1: schematisch eine Pulversprühbeschichtungsanlage nach der Erfindung als Beispiel von einer Vielzahl von verschiedenen Pulversprühbeschichtungsanlagen, in welchen die in anderen Figuren enthaltene weitere Erfindung anwendbar ist,
- Fig. 2: einen Längsschnitt in Detektionsrichtung einer Pulverniveau-Sensoreinheit nach der Erfindung,
- Fig. 3: einen Längsschnitt ähnlich Fig. 2 einer weiteren Ausführungsform einer Pulverniveau-Sensoreinheit nach der Erfindung,
- Fig. 4: einen Längsschnitt ähnlich Fig. 2 einer weiteren Ausführungsform einer Pulverniveau-Sensoreinheit nach der Erfindung,
- Fig. 5: einen Längsschnitt ähnlich Fig. 2 einer weiteren Ausführungsform einer Pulverniveau-Sensoreinheit nach der Erfindung.

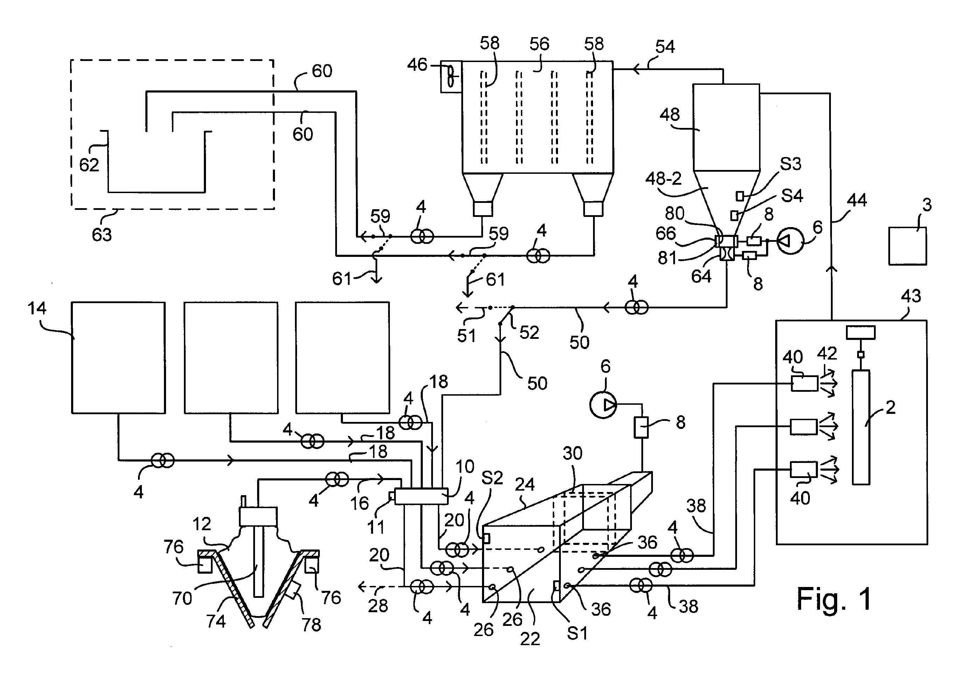

Fig. 1 zeigt schematisch eine bevorzugte Ausführungsform einer Pulversprühbeschichtungsanlage gemäß der Erfindung zum Sprühbeschichten von Objekten 2 mit Beschichtungspulver, welches danach in einem nicht gezeigten Wärmeofen auf das Objekt aufgeschmolzen wird. Für die Steuerung der Funktionen der Pulversprühbeschichtungsanlage sind ein oder mehrere elektronische Steuergeräte 3 vorgesehen. Zur pneumatischen Förderung des Beschichtungspulvers sind Pulverpumpen 4 vorgesehen. Dies können Injektoren sein, in welchen Beschichtungspulver mittels als Förderluft dienender Druckluft aus einem Pulverbehälter angesaugt wird, wonach dann das Gemisch aus Förderluft und Beschichtungspulver gemeinsam in einen Behälter oder zu einer Sprühvorrichtung strömt.

Injektoren sind z. B. aus der EP 0 412 289 B1 bekannt.

Als Pulverpumpe können auch solche Pumpenarten verwendet werden, welche kleine Pulverportionen mittels Druckluft nacheinander fördern, wobei jeweils eine kleine Pulverportion (Pulvermenge) in einer Pulverkammer gespeichert und dann mittels Druckluft aus der Pulverkammer herausgedrückt wird. Die Druckluft bleibt hinter der Pulverportion und schiebt die Pulverportion vor sich her. Diese Pumpenarten werden manchmal als Druckluftschubpumpen oder als Pfropfenförderungs-Pumpen bezeichnet, da die Druckluft die gespeicherte Pulverportion wie einen Pfropfen vor sich her durch eine Pumpenauslassleitung schiebt. Verschiedene Arten solcher Pulverpumpen zum Fördern von dichtem Beschichtungspulver sind beispielsweise aus folgenden Schriften bekannt: DE 103 53 968 A1, US 6,508,610 B2, US 2006/0193704 A1, DE 101 45 448 A1, WO 2005/051549 A1.

Die Erfindung ist nicht auf eine der genannten Arten von Pulverpumpen beschränkt.

Zur Erzeugung der Druckluft für die pneumatische Förderung des Beschichtungspulvers und zur Fluidisierung des Beschichtungspulvers ist eine Druckluftquelle 6 vorgesehen, welche über entsprechende Druckeinstellelemente 8, z. B. Druckregler und/oder Ventile, an die verschiedenen Geräte angeschlossen ist.

Frischpulver von einem Pulverlieferanten wird aus einem Lieferantenbehältnis, was beispielsweise ein Kleinbehältnis 12 z. B. in Form eines formstabilen Behälters oder eines Sackes mit einer Pulvermenge von beispielsweise zwischen 10 bis 50 kg, z. B. 25 kg, oder z. B. ein Großbehältnis 14, beispielsweise ebenfalls ein formstabiler Behälter oder ein Sack, mit einer Pulvermenge zwischen beispielsweise 100 kg und 1000 kg sein kann, mittels einer Pulverpumpe 4 in einer Frischpulverleitung 16 oder 18 einer Siebvorrichtung 10 zugeführt. Die Siebvorrichtung 10 kann mit einem Vibrator 11 versehen sein. In der folgenden Beschreibung bedeuten die Ausdrücke "Kleinbehälter" und "Großbehälter" jeweils sowohl "formstabiler Behälter" als auch "nicht formstabiler, flexibler Sack", ausgenommen wenn ausdrücklich auf die eine oder die andere Behältnisart verwiesen wird.

Das von der Siebvorrichtung 10 gesiebte Beschichtungspulver wird durch Schwerkraft oder vorzugsweise jeweils durch eine Pulverpumpe 4 über eine oder mehrere Pulverzufuhrleitungen 20 durch Pulvereinlassöffnungen 26 in eine Zwischenbehälterkammer 22 eines formstabilen Zwischenbehälters 24 gefördert. Das Volumen der Zwischenbehälterkammer 22 ist vorzugsweise wesentlich kleiner als das Volumen des Frischpulver-Kleinbehälters 12.

Gemäß einer bevorzugten Ausführungsform der Erfindung ist die Pulverpumpe 4 der mindestens einen Pulverzufuhrleitung 20 zu dem Zwischenbehälter 24 eine Druckluftschubpumpe. Hierbei kann der Anfangsabschnitt der Pulverzufuhrleitung 20 als Pumpenkammer dienen, in welche von der Siebvorrichtung 10 gesiebtes Pulver durch ein Ventil, z. B. ein Quetschventil, fällt. Nachdem diese Pumpenkammer eine bestimmte Pulverportion enthält, wird die Pulverzufuhrleitung 20 durch Schließen des Ventils von der Siebvorrichtung 10 strömungsmäßig getrennt. Danach wird die Pulverportion mittels Druckluft durch die Pulverzufuhrleitung 20 in die Zwischenbehälterkammer 20 gestoßen.

Die Pulvereinlassöffnungen 26 sind vorzugsweise in einer Seitenwand des Zwischenbehälters 24, vorzugsweise nahe des Bodens der Zwischenbehälterkammer 22 angeordnet, sodass beim Durchspülen der Zwischenbehälterkammer 22 mittels Druckluft auch am Boden befindliche Pulverreste durch die Pulvereinlassöffnungen 26 hinausgetrieben werden können, zu welchem Zwecke die Pulverzufuhrleitungen 20 vorzugsweise von der Siebvorrichtung 10 getrennt und in einen Abfallbehälter gerichtet werden, wie dies in Fig. 1 schematisch durch einen gestrichelten Pfeil 28 angedeutet ist. Zum Reinigen der Zwischenbehälterkammer 22 ist beispielsweise ein mit Druckluftdüsen versehener Tauchkolben 30 durch die Zwischenbehälterkammer 22 hindurch bewegbar.

An ein oder vorzugsweise mehrere Pulverauslassöffnungen 36 sind Pulverpumpen 4, z. B. Injektoren, zur Förderung von Beschichtungspulver durch Pulverleitungen 38 zu Sprühvorrichtungen 40 angeschlossen. Die Sprühvorrichtungen 40 können Sprühdüsen oder Rotationszerstäuber zum Sprühen des Beschichtungspulvers 42 auf das zu beschichtende Objekt 2 aufweisen, welches sich vorzugsweise in einer Beschichtungskabine 43 befindet. Die Pulverauslassöffnungen 36 befinden sich vorzugsweise in einer Wand, welche der Wand gegenüberliegt, in welcher sich die Pulvereinlassöffnungen 26 befinden. Die Pulverauslassöffnungen 36 sind vorzugsweise ebenfalls nahe des Bodens der Zwischenbehälterkammer 22 angeordnet.

Die Zwischenbehälterkammer 22 hat vorzugsweise eine Größe, die im Bereich eines Fassungsvermögens an Beschichtungspulver zwischen 1,0 kg und 12 kg liegt, vorzugsweise zwischen 2,0 kg und 8,0 kg. Gemäß anderen Gesichtspunkten beträgt die Größe der Zwischenbehälterkammer 22 vorzugsweise zwischen 500 cm³ und 30 000 cm³, vorzugsweise zwischen 2000 cm³ und 20 000 cm³. Die Größe der Zwischenbehälterkammer 22 wird in Abhängigkeit von der Anzahl der Pulverauslassöffnungen 36 und der daran angeschlossenen Pulverleitungen 38 derart gewählt, dass ein kontinuierlicher Sprühbeschichtungsbetrieb möglich ist, jedoch die Zwischenbehälterkammer 22 in Beschichtungspausen für einen Pulverwechsel schnell gereinigt werden kann, vorzugsweise automatisch. Die Zwischenbehälterkammer 22 kann mit einer Fluidisiervorrichtung zum Fluidisieren des Beschichtungspulvers versehen werden.

Beschichtungspulver 42, welches nicht an dem Objekt 2 haftet, wird als Überschusspulver über eine Überschusspulverleitung 44 mittels eines Saugluftstroms eines Gebläses 46 in einen Zyklonabscheider 48 gesaugt. Das Überschusspulver wird im Zyklonabscheider 48 so weit wie möglich vom Saugluftstrom getrennt. Der getrennte Pulveranteil wird dann als Rückgewinnungspulver vom Zyklonabscheider 48 über eine Pulverrückgewinnungsleitung 50 zu der Siebvorrichtung 10 geleitet, wo es durch die Siebvorrichtung 10 hindurch, entweder allein oder vermischt mit Frischpulver, über die Pulverzufuhrleitungen 20 wieder in die Zwischenbehälterkammer 22 gelangt.

Je nach Pulversorte und/oder Pulververschmutzungsgrad kann auch die Möglichkeit vorgesehen werden, die Pulverrückgewinnungsleitung 50 von der Siebvorrichtung 10 zu trennen und das Rückgewinnungspulver in einen Abfallbehälter zu leiten, wie dies in Fig. 1 durch eine gestrichelte Linie 51 schematisch dargestellt ist. Die Pulverrückgewinnungsleitung 50 kann, damit sie nicht von der Siebvorrichtung 10 getrennt zu werden braucht, mit einer Weiche 52 versehen werden, an welcher sie alternativ mit der Siebvorrichtung 10 oder mit einem Abfallbehälter verbindbar ist.

Der Zwischenbehälter 24 kann einen oder mehrere, beispielsweise zwei Sensoren S1 und/oder S2 aufweisen, um die Zufuhr von Beschichtungspulver in die Zwischenbehälterkammer 22 mittels des Steuergerätes 3 und der Pulverpumpen 4 in den Pulverzuleitungen 20 zu steuern. Beispielsweise detektiert der untere Sensor S1 ein unteres Pulverniveaulimit und der obere Sensor S2 ein oberes Pulverniveaulimit.

Der untere Endabschnitt 48-2 des Zyklonabscheiders 48 kann als Vorratsbehälter für Rückgewinnungspulver ausgebildet und verwendet werden und hierfür mit einem oder mehreren, beispielsweise zwei Sensoren S3 und/oder S4 versehen werden, welche funktionsmäßig mit dem Steuergerät 3 verbunden sind. Dadurch kann beispielsweise automatisch die Frischpulverzufuhr durch die Frischpulverzuleitungen 16 und 18 gestoppt werden, solange im Zyklonabscheider 48 ausreichend Rückgewinnungspulver vorhanden ist, um der Zwischenbehälterkammer 22 durch die Siebvorrichtung 10 hindurch Rückgewinnungspulver in ausreichender Menge zuzuführen, welche für den Sprühbeschichtungsbetrieb mittels der Sprühvorrichtungen 40 erforderlich ist. Wenn im Zyklonabscheider 48 hierfür nicht mehr ausreichend Rückgewinnungspulver vorhanden ist, dann kann automatisch auf die Zufuhr von Frischpulver durch die Frischpulverzuleitungen 16 oder 18 umgeschaltet werden. Ferner besteht auch die Möglichkeit, Frischpulver und Rückgewinnungspulver gleichzeitig der Siebvorrichtung 10 zuzuführen, sodass sie miteinander vermischt werden.

Die Abluft des Zyklonabscheiders 48 gelangt über eine Abluftleitung 54 in eine Nachfiltervorrichtung 56 und darin durch ein oder mehrere Filterelemente 58 zu dem Gebläse 46 und nach diesem in die Außenatmosphäre. Die Filterelemente 58 können Filtersäcke oder Filterpatronen oder Filterplatten oder ähnliche Filterelemente sein. Das mittels der Filterelemente 58 vom Luftstrom getrennte Pulver ist normalerweise Abfallpulver und fällt durch Schwerkraft in einen Abfallbehälter oder kann, wie Fig. 1 zeigt, über eine oder mehrere Abfallleitungen 60, welche jeweils eine Pulverpumpe 4 enthalten, in einen Abfallbehälter 62 an einer Abfallstation 63 gefördert werden.

Je nach Pulverart und Pulverbeschichtungsbedingungen kann das Abfallpulver auch wieder zurückgewonnen werden zur Siebvorrichtung 10, um erneut in den Beschichtungskreislauf zu gelangen. Dies ist in Fig. 1 durch Weichen 59 und Zweigleitungen 61 der Abfallleitungen 60 schematisch dargestellt.

Beim Mehrfarbenbetrieb, bei welchem verschiedene Farben jeweils nur kurze Zeit versprüht werden, werden üblicherweise der Zyklonabscheider 48 und die Nachfiltervorrichtung 56 verwendet und das Abfallpulver der Nachfiltervorrichtung 56 gelangt in den Abfallbehälter 62. Der Pulverabscheide-Wirkungsgrad des Zyklonabscheiders 48 ist zwar meistens geringer als der der Nachfiltervorrichtung 56, jedoch kann er schneller gereinigt werden als die Nachfiltervorrichtung 56. Beim Einfarbenbetrieb, bei welchem für lange Zeit das gleiche Pulver verwendet wird, ist es möglich, auf den Zyklonabscheider 48 zu verzichten und die Überschusspulverleitung 44 anstelle der Abluftleitung 54 an die Nachfiltervorrichtung 56 anzuschließen und die Abfallleitungen 60, welche in diesem Fall zurückzugewinnendes Pulver enthalten, als Rückgewinnungspulverleitungen an die Siebvorrichtung 10 anzuschließen. Beim Einfarbenbetrieb wird üblicherweise nur dann der Zyklonabscheider 48 in Kombination mit der Nachfiltervorrichtung 56 verwendet, wenn es sich um ein problematisches Beschichtungspulver handelt. In diesem Fall wird nur das Rückgewinnungspulver des Zyklonabscheiders 48 über die Pulverrückgewinnungsleitung 50 der Siebvorrichtung 10 zugeführt, während das Abfallpulver der Nachfiltervorrichtung 56 als Abfall in den Abfallbehälter 62 oder in einen anderen Abfallbehälter gelangt, welch letzterer ohne Abfallleitungen 60 direkt unter eine Auslassöffnung der Nachfiltervorrichtung 56 gestellt werden kann.

Das untere Ende der Zyklonvorrichtung 48 kann ein Auslassventil 64, beispielsweise ein Quetschventil aufweisen. Ferner kann oberhalb von diesem Auslassventil 64, im oder am unteren Ende des, als Vorratsbehälter ausgebildeten, unteren Endabschnittes 48-2 des Zyklonabscheiders 48, eine Fluidisiervorrichtung 66 zur Fluidisierung des Beschichtungspulvers vorgesehen sein. Die Fluidisiervorrichtung 66 enthält mindestens eine Fluidisierwand 80 aus einem offenporigem oder mit engen Bohrungen versehenen Material, welches für Druckluft, jedoch nicht für Beschichtungspulver durchlässig ist. Die Fludisierwand 80 ist zwischen dem Pulverweg und einer Fluidiesier-Druckluftkammer 81 angeordnet. Die Fluidisier-Druckluftkammer 81 ist über ein Druckeinstellelement 8 mit der Druckluftquelle 6 verbindbar.

Die Frischpulverleitung 16 und/oder 18 kann an ihrem stromaufwärtigen Ende, entweder direkt oder durch die Pulverpumpe 4, mit einem Pulverförderrohr 70 strömungsmäßig verbunden sein, welches in den Lieferantenbehälter 12 oder 14 eintauchbar ist zum Absaugen von frischem Beschichtungspulver. Die Pulverpumpe 4 kann am Anfang, am Ende oder dazwischen in der Frischpulverleitung 16 bzw. 18 oder am oberen oder unteren Ende des Pulverförderrohres 70 angeordnet werden.

Fig. 1 zeigt als Frischpulver-Kleinbehälter einen Frischpulver-Pulversack 12 in einem Sackaufnahmetrichter 74. Der Pulversack 12 wird von dem Sackaufnahmetrichter 74 in einer definierten Form gehalten, wobei die Sacköffnung sich am oberen Sackende befindet. Der Sackaufnahmetrichter 74 kann auf einer Waage oder Wägesensoren 76 angeordnet werden. Diese Waage oder die Wägesensoren können, je nach Art, eine optische Anzeige und/oder ein elektrisches Signal erzeugen, welches nach Abzug des Gewichts des Sackaufnahmetrichters 74 dem Gewicht und damit auch der Menge des Beschichtungspulvers in dem Kleinbehälter 12 entspricht. Am Sackaufnahmetrichter 74 ist vorzugsweise mindestens ein ihn vibrierender Vibrator 78 angeordnet.

Es können zwei oder mehr Kleinbehälter 12 jeweils in einem Sackaufnahmetrichter 74 und/oder zwei oder mehr Grossbehältnisse 14 vorgesehen werden, die alternativ benutzbar sind. Dadurch ist ein schneller Wechsel von einem auf einen anderen Kleinbehälter 12 oder Grossbehältnis 14 möglich.

Mögliche Varianten der Erfindung, ohne darauf beschränkt zu sein: die Siebvorrichtung 10 kann in den Zwischenbehälter 24 integriert werden. Ferner kann die Siebvorrichtung 10 weggelassen werden, wenn das Frischpulver eine ausreichend gute Qualität hat. In diesem Fall besteht ferner die Möglichkeit, zum Sieben des Rückgewinnungspulvers der Leitungen 44 und 50 ein separates Sieb zu verwenden, z. B. stromaufwärts oder stromabwärts des Zyklonabschalters 48 oder im Zyklonabschalter 48. Auch das Rückgewinnungspulver benötigt dann kein Sieb, wenn seine Pulverqualität für eine Wiederverwendung ausreichend gut ist.

Nachfolgend werden gemäß der Erfindung ausgebildete Pulverniveau-Sensoreinheiten beschrieben. Die vorstehend genannten Sensoren S1, S2, S3 und S4 können gemäß den hier nachfolgend beschrieben Pulverniveau-Sensoreinheiten 100, 200 oder 300 ausgebildet sein. Es können Schalter oder nicht-schaltende Elemente sein.

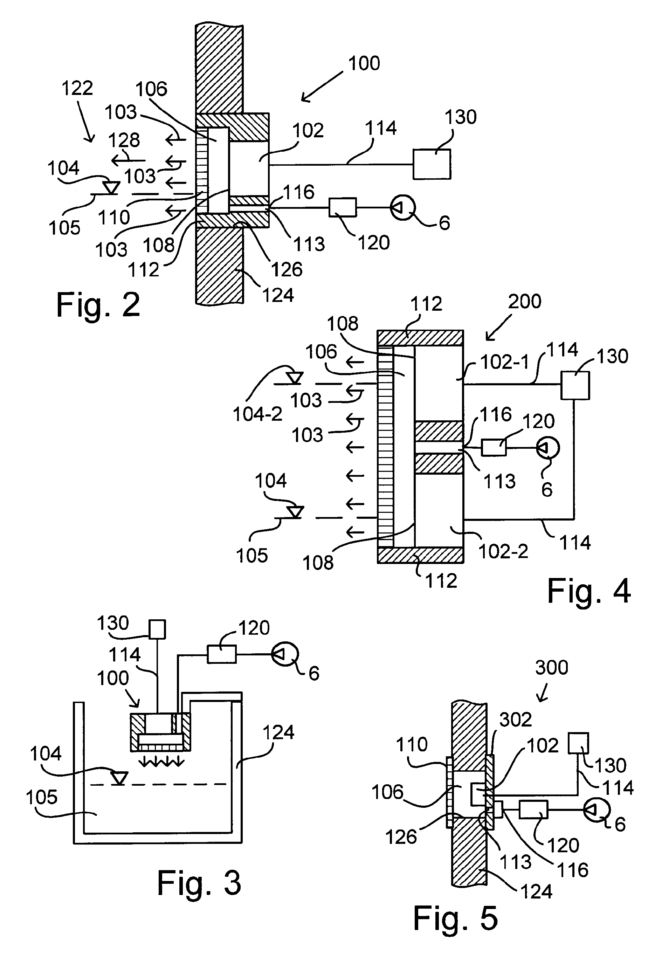

Die in Fig. 2 dargestellte Pulverniveau-Sensoreinheit 100 gemäß der Erfindung enthält einen, vorzugsweise kapazitiven oder induktiven, Sensor 102 zur Detektion des Pulverniveaus 104 von Beschichtungspulver 105 in einem Pulverbehälter, beispielsweise in dem Zwischenbehälter 24 und/oder in dem als Vorratsbehälter dienenden unteren Endabschnitt 48-2 des Zyklonabscheiders 48, oder in einem Pulversack oder Pulverbeutel oder in einem anderen Pulverbehältnis.

Die Pulverniveau-Sensoreinheit 100 enthält eine Druckluftkammer 106, welche hinten durch eine die Detektionsseite des Sensors 102 bildende, in Detektionsrichtung zeigende Sensordetektionsfläche 108, vorne durch eine, der Sensordetektionsfläche 108 mit Abstand gegenüberliegend angeordnete Frontwand 110 und am Kammerumfang durch eine die Druckluftkammer umgebende Umgebungswand 112 begrenzt ist.

Die Frontwand 110 ist derart luftdurchlässig porös ausgebildet, dass sie auf ihrer gesamten Erstreckung für Druckluft in der Druckluftkammer 106 durchlässig ist, jedoch für Sprühbeschichtungspulver 105 undurchlässig ist, welches sich auf der von der Druckluftkammer 106 abgewandten Außenseite der Frontwand 110 im Pulverbehälter befinden kann. Die Fronwand 110 ist beispielsweise eine Membran. Die poröse Frontwand 110 hat so kleine offene Poren oder Kanäle, dass die Druckluft von der Druckluftkammer 106 durch die Poren oder Kanäle (im folgenden beide nur Poren genannt) hindurch nur in Form von kleinen Druckluftblasen oder dünnen, schwachen Druckluftstrahlen 103 in den Pulverbehälter strömen kann.

Der Sensor 102 und die Frontwand 110 sind derart ausgebildet, dass der Sensor 102 durch die poröse Frontwand 110 hindurch Sprühbeschichtungspulver 105 detektieren und in Abhängigkeit vom Detektionsergebnis ein Sensorsignal auf einer Signalleitung 114 erzeugen kann.

Ein Druckluftkanal 113 erstreckt sich von der Druckluftkammer 106 zu einem externen Druckluftanschluss 116. An den Druckluftanschluss 116 kann über Steuerelemente, beispielsweise einen Druckregler 120 und/oder eines oder mehrere Ventile eine Druckluftquelle 6 angeschlossen werden. Die Druckluft strömt durch den Druckluftkanal 113 in die Druckluftkammer 106 und von dieser in kleiner Menge über die gesamte Frontwand 110 verteilt durch die kleinen Poren der Frontwand hindurch in den Behälterinnenraum 122, in welchem das Pulverniveau detektiert werden soll.

Der Sensor 102, die poröse Frontwand 110 und die Umgebungswand 112 bilden vorzugsweise zusammen eine mechanische Baueinheit, welche an einer Behälterwand 124 befestigbar ist, entweder auf einer Wandoberfläche oder entsprechend Fig. 2 in einer Wandöffnung 126. Ferner besteht auch die Möglichkeit die Pulverniveau-Sensoreinheit 100 nicht an einer Behälterwand, sondern an einem anderen in einen Pulverbehälter hineinragenden Element zu befestigen. Dies zeigt schematisch Fig. 3. Ferner kann die Pulverniveau-Sensoreinheit nicht nur in horizontaler Sensorrichtung 128 angeordnet werden, sondern auch in einer schrägen Lage oder vertikal nach unten oder vertikal nach oben gerichtet. Fig. 3 zeigt eine vertikal nach unten gerichtete Lage der Pulverniveau-Sensoreinheit 100.

Die Umgebungswand 112 kann ähnlich wie in Fig. 2 dargestellt als Gehäuse ausgebildet sein, in welchem der Druckluftkanal 113 gebildet ist und in welchem der Sensor 102 sowie die Frontwand 110 befestigt sind. Die Umgebungswand 112 kann z. B. eckig oder rund sein, z. B. ein Rohrstück mit rein zylindrischer Wand, oder zylindrisch mit einer inneren Abstufung gemäß Fig. 2 sein.

Die Sensorsignalleitung 114 ist an ein Steuergerät 130 angeschlossen, welches in Abhängigkeit von Sensorsignalen des Sensors 102 und damit in Abhängigkeit von dem detektierten Pulverniveau 104 ein Steuergerät-Signal erzeugt. Das Steuergerät-Signal kann ein optisches, akustisches oder sonstiges Signal und/oder ein Steuersignal zur Steuerung von Teilen der Sprühbeschichtungsanlage von Fig. 1 sein. Das Steuergerät 130 kann an das bezüglich Fig. 1 beschriebene Steuergerät 3 angeschlossen oder durch dieses Steuergerät 3 gebildet sein.

Die poröse Fronwand 110 stellt ein vom Sensor 102 detektiertes Messhindernis und damit einen Messfehler dar. Dieser Messfehler muss von dem vom Sensor 102 detektierten Messwert subtrahiert werden, um ein dem tatsächlichen Pulverniveau 104 entsprechendes Messsignal zu erhalten. Zu diesem Zweck kann entweder der Sensor 102 derart geeicht sein, dass das von ihm auf der Sensorsignalleitung 114 erzeugte Messsignal bereits dem korrigierten Messwert entspricht, oder das Steuergerät 130 kann derart ausgebildet werden, dass es diese Korrektur vornimmt.

Fig. 4 zeigt eine weitere Ausführungsform einer Pulverniveau-Sensoreinheit 200 nach der Erfindung, welche sich von der Ausführungsform nach Fig. 2 nur dadurch unterscheidet, dass sie zwei anstatt nur einen Sensor 102 beinhaltet, welche in Fig. 4 mit 102-1 und 102-2 bezeichnet sind. Ihre Sensordetektionsflächen 108 begrenzen jeweils die Rückseite der Druckluftkammer 106. Dadurch können mit einer einzigen Pulverniveau-Sensoreinheit 200 zwei verschiedene Pulverniveaus 104 und 104-2 detektiert werden.

Während die Ausführungsformen nach den Figuren 2, 3 und 4 Pulverniveau-Sensoreinheiten zeigen, welche jeweils eine mechanische Baueinheit und eine funktionelle Einheit sind, zeigt Fig. 5 eine weitere Ausführungsform einer Pulverniveau-Sensoreinheit 300 nach der Erfindung, welche sich von den beschriebenen Ausführungsformen nur dadurch unterscheidet, dass die Pulverniveau-Sensoreinheit 300 keine mechanische, sondern nur eine funktionelle Einheit ist. Gleiche, bereits beschriebene Teile sind mit gleichen Bezugszahlen versehen und haben die gleiche Funktion. In einer Behälterwand 124 ist eine Wandöffnung 126 gebildet. Der durch die Wandöffnung 126 gebildete Hohlraum bildet die Druckkammer 106. Die Wandöffnung ist auf ihrer Behälterinnenseite durch die poröse Frontwand 110 begrenzt und auf der Behälteraußenseite durch den Sensor 102 und eine Trägerplatte 302, an welcher der Sensor 102 befestigt ist.

Der Pulverbehälter, in welchem das Pulverniveau detektiert wird, kann ein formstabiler Behälter oder ein flexibler Sack oder flexibler Beutel sein.

## Patentansprüche

1. Pulverniveau-Sensoreinheit für Sprühbeschichtungspulver in einem Pulverbehältnis, enthaltend mindestens einen Sensor (102; 102-1, 102-2) zur Detektion des Pulverniveaus in dem Pulverbehältnis,
**dadurch gekennzeichnet,**
**dass** eine Druckluftkammer (106) vorgesehen ist, welche hinten durch eine, die Detektionsseite des Sensors bildende, in Detektionsrichtung zeigende Sensordetektionsfläche (108) und vorne durch eine poröse Frontwand (110) begrenzt ist, welche der Sensordetektionsfläche (108) mit Abstand gegenüberliegend angeordnet ist; und dass ein Druckluftkanal (113) vorgesehen ist, welcher die Druckluftkammer (106) mit einem externen Druckluftanschluss (116) verbindet, wobei die poröse Frontwand (110) durch die Poren hindurch nur für Druckluft, jedoch nicht für Sprühbeschichtungspulver durchlässig ist und wobei die Frontwand (110) derart ausgebildet ist, dass der Sensor (102; 102-1, 102-2) durch die Frontwand hindurch Sprühbeschichtungspulver detektieren und in Abhängigkeit vom Detektionsergebnis ein Sensorsignal erzeugen kann.

2. Pulverniveau-Sensoreinheit nach Anspruch 1,
**dadurch gekennzeichnet,**
**dass** die poröse Frontwand (110) so kleine, luftdurchlässige Poren hat, dass die Druckluft durch sie nur hindurchperlen oder in sehr dünnen schwachen Strahlen hindurchströmen kann.

3. Pulverniveau-Sensoreinheit nach einem der vorhergehenden Ansprüche,
**dadurch gekennzeichnet,**
**dass** mindestens zwei Sensoren (102-1, 102-2) nebeneinander und mit Abstand von der porösen Frontwand (110) angeordnet sind und jeweils einen Teil der Druckluftkammer (106) begrenzen.

4. Pulverniveau-Sensoreinheit nach einem der vorhergehenden Ansprüche,
**dadurch gekennzeichnet,**
**dass** der mindestens eine Sensor (102; 102-1, 102-2) derart geeicht ist, dass der Sensor den durch die Detektion der porösen Frontwand (110) entstehenden Detektionsfehler automatisch korrigiert, sodass das Sensorsignal dem aktuellen Pulverniveau (104) entspricht.

5. Pulverniveau-Sensoreinheiten nach einem der vorhergehenden Ansprüche,
**dadurch gekennzeichnet,**
**dass** der mindestens eine Sensor (102; 102-1, 102-2) an ein Steuergerät (130) angeschlossen ist, welches in Abhängigkeit von Sensorsignalen des mindestens einen Sensors und damit in Abhängigkeit von dem detektierten Pulverniveau (104) ein Steuergerät-Signal erzeugt.

6. Pulverniveau-Sensoreinheit nach einem der Ansprüche 1 bis 3,
**dadurch gekennzeichnet,**
**dass** ein an den Sensor angeschlossenes Steuergerät (130) derart geeicht ist, dass das von dem mindestens einen Sensor (102; 102-1, 102-2) erhaltene Sensorsignal durch einen Korrekturwert berichtigt wird, welcher dem Detektionsfehler entspricht, welcher darin besteht, dass der mindestens eine Sensor außer dem Pulverniveau auch die poröse Frontwand (110) detektiert, sodass ein von dem Steuergerät erzeugtes Steuergerätesignal dem tatsächlichen Pulverniveau entspricht.

7. Pulverniveau-Sensoreinheit nach einem der vorhergehenden Ansprüche,
**dadurch gekennzeichnet,**
**dass** der mindestens eine Sensor (102; 102-1, 102,2) und die poröse Frontwand (110) sowie ein diese beiden Teile miteinander verbindendes Gehäuse (112) zusammen mit der zwischen ihnen gebildeten Druckluftkammer (106) eine mechanische Baueinheit bilden.

8. Pulverniveau-Sensoreinheit nach einem der vorhergehenden Ansprüche 1 bis 6,
**dadurch gekennzeichnet,**
**dass** der mindestens eine Sensor (102; 102-1, 102-2) und die poröse Frontwand (110) getrennt voneinander an einer Kammerwand (124) eines Pulverbehälters befestigt sind und an einer Wandöffnung (126) einander gegenüberliegend angeordnet sind, wobei der Sensor, die Frontwand und die Innenfläche der Wandöffnung jeweils einen Teil der Druckluftkammer (106) begrenzen.
